Europäisches Patentamt

European Patent Office

Office européen des brevets

(19)

(11) Numéro de publication: **0 105 787**
**B1**

(12) # FASCICULE DE BREVET EUROPEEN

(45) Date de publication du fascicule du brevet:
**10.12.86**

(51) Int. Cl.⁴: **A 21 D 6/00**

(21) Numéro de dépôt: **83401858.2**

(22) Date de dépôt: **23.09.83**

(54) Procédé de prégélatinisation partielle de la farine, et farine préparée par un tel procédé.

(30) Priorité: **23.09.82 FR 8216020**

(43) Date de publication de la demande:
**18.04.84 Bulletin 84/16**

(45) Mention de la délivrance du brevet:
**10.12.86 Bulletin 86/50**

(84) Etats contractants désignés:
**AT BE CH DE GB IT LI LU NL SE**

(56) Documents cités:
**DE - A - 2 401 023**
**FR - A - 705 969**
**GB - A - 1 085 562**
**US - A - 2 684 302**

(73) Titulaire: **SOCIETE DES MOULINS DE WESTHOVE (Société Anonyme), 32, rue J.B. Lebas BP 2 - Blendecques, F-62570 Wizernes (FR)**

(72) Inventeur: **Houzet, Jean, 32, rue J.B. Lebas BP 2 Blendecques, F-62570 Wizernes (FR)**
Inventeur: **Bouchez, Patrick, 8 Avenue de Champagne, F-62360 Condette (FR)**

(74) Mandataire: **L'Helgoualch, Jean et al, OFFICE PICARD 134 Boulevard de Clichy, F-75018 Paris (FR)**

ACTORUM AG

## Description

La présente invention concerne un procédé de traitement de la farine, et plus particulièrement un procédé de traitement de la farine par prégélatinisation partielle, en vue de son utilisation dans l'industrie alimentaire, ainsi que les nouveaux produits ainsi préparés.

Des farines d'origines diverses sont utilisées dans l'industrie alimentaire, et par exemple des farines de céréales, telles que le blé, le seigle, le maïs ou l'orge, des farines de protéagineux tels que le soja, ou encore des farines de légumineuses. Ces farines sont obtenues par une mouture plus ou moins poussée des graines, des racines, des tiges, etc, et peuvent être utilisées telles quelles ou après traitement pour la préparation de produits alimentaires.

Certains types de mélanges alimentaires connus sont à base d'amidon, et par exemple d'amidon prégélatinisé, auquel on doit ajouter divers ingrédients destinés à améliorer la texture du produit final, sa présentation, sa conservation, son goût, etc. On sait que la gélatinisation de l'amidon s'effectue par rupture des granules d'amidon sous l'action combinée de l'humidité, la température et la pression, et un amidon prégélatinisé présente l'avantage d'être dispersable dans l'eau froide, ce qui permet par exemple son utilisation dans des préparations alimentaires instantanées. Toutefois, l'utilisation de l'amidon se heurte à quelques inconvénients résultant de son coût relativement élevé, en particulier dans le cas de l'amidon prégélatinisé modifié chimiquement, qui, en outre, est limité dans son emploi. Par ailleurs, l'amidon est insipide, ce qui peut constituer un inconvénient dans le cas de certaines préparations alimentaires.

On utilise également dans l'industrie alimentaire des farines, dont certaines contiennent essentiellement de l'amidon, mais dont la qualité doit être rigoureusement contrôlée, et, pour des raisons technologiques, de nombreuses farines sont inutilisables pour certaines applications de l'alimentation humaine.

Le brevet DE-2 401 023 décrit un procédé de prégélatinisation d'une farine par addition d'eau et passage de vapeur, puis mélange, adapté à la préparation de granulés. Le brevet GB-1 085 562 prévoit de traiter à la vapeur à 100 °C pendant 3 à 5 min, une farine présentant une humidité de 14 à 21%. Un procédé de prégélatinisation de la farine par chauffage à la vapeur et addition d'eau est décrit au brevet FR-705 969.

La présente invention a pour objet un procédé de traitement de farines d'origines diverses par prégélatinisation partielle permettant leur utilisation dans l'industrie alimentaire.

L'invention concerne notamment un procédé de prégélatinisation partielle de farines d'origines diverses applicable dans l'industrie alimentaire dans de bonnes conditions économiques, en abaissant le coût de la fabrication des produits alimentaires sans nuire à leur qualité.

L'invention a encore pour objet les farines prégélatinisées ainsi obtenues, répondant à certaines caractéristiques physico-chimiques bien spécifiées, utilisables notamment dans la préparation de divers mélanges en alimentation humaine.

Le procédé de prégélatinisation partielle de farines conforme à la présente invention est tout particulièrement avantageux car il peut s'appliquer à des farines d'origines diverses qui peuvent contenir ou ne pas contenir d'amidon. Par exemple le procédé suivant l'invention s'applique tout particulièrement aux farines de céréales telles que le blé, l'orge, le maïs, qui contiennent généralement environ 1% de matières grasses, 0,5 à 1,5% de sels minéraux, 9 à 12% de protéines, 12 à 16% d'eau, le reste, soit environ 70 à 78%, étant constitué par l'amidon. Il peut également s'appliquer dans les mêmes conditions à une farine ne contenant pas d'amidon, et par exemple une farine de soja.

Le procédé suivant l'invention est donc particulièrement avantageux dans la mesure où il permet de valoriser certaines sortes de farines qui jusqu'à présent ne pouvaient pas être utilisées pour l'alimentation, c'est-à-dire qu'il permet d'employer des farines là où jusqu'à présent elles n'avaient pas d'application par manque de propriétés fonctionelles.

Le procédé de traitement d'une farine végétale par prégélatinisation partielle, conformément à l'invention, consiste à humidifier la farine de manière à lui conférer une humidité bien déterminée puis à la chauffer dans des conditions précises de température, de pression et de durée, qui peuvent toutefois varier en fonction de la nature de la farine utilisée.

Plus précisément, suivant l'invention on humidifie la farine de manière à lui donner une humidité totale comprise entre 18 et 35% environ, puis on chauffe à la vapeur d'eau pendant 5 à 50 minutes, et enfin on broie et on sèche la farine ainsi traitée.

Suivant une forme préférentielle de mise en œuvre de l'invention la farine est humidifiée de telle sorte que son humidité totale soit comprise entre 25 et 30%, puis elle est répartie avant chauffage sur des plateaux en une couche d'épaisseur comprise entre 1 et 5 cm.

Il est important de noter que les valeurs indiquées ci-dessus concernent l'humidité totale de la farine, tenant compte de l'humidité initiale et de l'eau apportée. On ne peut obtenir de résultats satisfaisants avec une farine dont l'humidité initiale serait de 15% et à laquelle on ajouterait pas d'eau. Par ailleurs, si l'humidité totale dépasse la valeur de 35%, on constate une perte d'individualité des grains. Il peut par exemple être avantageux d'ajouter environ 15% du poids de la farine de départ en eau, ce qui correspond à une teneur totale en eau d'environ 25%. Pendant le chauffage dans un autoclave la farine prend en supplément une partie de la vapeur d'eau qui se condense pour l'échauffer, et le produit à la sortie titre environ 30% d'humidité.

Le chauffage à la vapeur d'eau peut s'effectuer à pression atmosphérique normale, en vapeur saturée, pendant une durée comprise entre 20 et 50 minutes environ. Il est toutefois plus avantageux, suivant une variante du procédé de l'invention, de chauffer la farine humidifiée sous une pression de vapeur comprise entre 0,5 et 0,9 bars. Le temps de chauffage par autoclavage, dans ces conditions peut être de l'ordre de 5 à 25 minutes. La durée du chauffage est ajustée le cas échéant de manière à obtenir une prégélatinisation partielle appropriée; si on diminue la pression, il est nécessaire d'augmenter la durée; par exemple, si on abaisse la pression à 0,1 bar, la durée devrait être d'environ 30 à 35 min.

Le chauffage au cours du traitement conforme au procédé de l'invention est tel que la température au cœur de la farine, mesurée à la sortie du dispositif de chaffage, soit d'environ 85 à 90 °C. En dehors de cet intervalle, la farine est peu ou trop prégélatinisée. La possibilité de chauffer la farine à une telle température résulte principalement de son hydratation relativement faible, et constitue un avantage par rapport aux procédés usuels de gélatinisation de l'amidon. On sait en effet que plus une farine de céréale est humide, plus basses doivent être les températures de traitement. Dans le cas de l'amidon, l'humidité est importante et les traitements se font sur des amidons à écoulement fluide (solutions), et non à écoulement poudreux comme dans l'invention, et la température de traitement est alors limitée à 60–75 °C environ. De plus, dans le cas d'une farine à écoulement fluide, une température supérieure à 70 °C peut provoquer des changements défavorables des qualités organoleptiques contrairement à l'invention.

Le procédé conforme à la présente invention peut être mis en œuvre dans les appareillages usuels de la technique du traitement de la farine, de l'amidon ou des produits similaires. Par exemple, le chauffage peut s'effectuer dans un autoclave comportant des plateaux sur lesquels la farine est répartie. De même, le broyage et le séchage s'effectuent dans des appareils usuels.

La farine prégélatinisée partiellement conformément au procédé de l'invention possède des propriétés comparables à celles d'un amidon prégélatinisé modifié chimiquement de type connu. Toutefois un tel amidon est limité dans son emploi tandis que la farine traitée suivant l'invention ne l'est pas; de plus le prix de revient d'une farine traitée conformément à l'invention est inférieur à celui d'un amidon prégélatinisé modifié chimiquement, et le traitement peut être effectué à l'aide d'un appareillage usuel et peu coûteux.

La farine prégélatinisée partiellement suivant l'invention peut être caractérisée par sa biréfringence. On sait qu'un amidon cru est insoluble dans l'eau froide et biréfringent tandis qu'un amidon gélatinisé devient dispersible dans l'eau et perd sa biréfringence. De manière analogue, la farine prégélatinisée partiellement suivant l'invention est partiellement dispersible dans l'eau, reprend moins d'eau qu'un amidon gélatinisé, et présente une biréfringence partielle.

On constate que la farine prégélatinisée partiellement selon le procédé de l'invention possède un bon pouvoir liant et ne présente pas de synérèse, ce qui autorise son emploi dans les produits alimentaires pouvant subir des cycles congélation-décongélation, et dans ceux où l'on doit utiliser habituellement des farines présentant une valeur amylographique élevée. Par ailleurs, la farine traitée conformément à l'invention possède une excellente résistance au cisaillement, équivalente, et parfois supérieure à celle des amidons modifiés tout en évitant les inconvénients inhérents aux amidons, et les mélanges alimentaires contenant une farine conforme à l'invention peuvent être mixés à vitesse élevée sans perte importante de viscosité.

Les farines prégélatinisées partiellement suivant l'invention peuvent être utilisées dans l'industrie alimentaire pour la préparation de produits instantanés tels que soupes ou sauces, ou de produits de cuisson et de surgélation et par exemple pommes dauphines, pâtes à crèpes, pâtes à beignets, etc. Elles peuvent également être employées dans les produits de pâtisserie et de biscuiterie et d'une manière générale dans tous les produits où l'on utilise habituellement des amidons ou des fécules. Dans tous ces cas, la farine prégélatinisée partiellement conformément à l'invention permet d'abaisser le coût de fabrication de ces préparations et d'en améliorer les qualités gustatives.

Les caractéristiques et avantages de l'invention apparaitront plus en détail dans les exemples donnés ci-après pour illustrer l'invention.

Exemple 1

200 kg d'une farine de blé de pays de type 65, ayant une humidité de 14%, sont placés dans une mélangeuse horizontale à rubans.

On pulvérise à l'aide de buses à l'intérieur de cette mélangeuse 30 litres d'eau à 15 °C en 5 minutes. On poursuit alors le mélange pendant 10 minutes.

Cette farine humidifiée est placée en couche de 3 centimètres sur des plateaux. Ces plateaux sont empilés les uns sur les autres en laissant un espacement d'un centimètre entre deux plateaux successifs. L'ensemble est alors introduit dans un autoclave, et la vapeur admise pendant 15 minutes à une pression de 0,7 bars.

A la sortie de l'autoclave, la température au cœur de la farine est de 90 °C; l'humidité de la farine est de 30%.

Les plateaux sont alors vidés dans une trémie qui alimente un démotteur puis un broyeur sécheur. On recueille 200 kg d'une farine de blé prégélatinisée partiellement.

Exemple 2

200 kg d'une farine de maïs de composition suivante:

| | |
|---|---|
| humidité | 12,5% |
| matières minérales | 1,3% |
| matières grasses | 4,4% |
| matières azotées | 8,0% |
| cellulose | 1,4% |
| glucides totaux | 72,5% |

sont placés dans une mélangeuse horizontale à rubans.

On pulvérise à l'aide de buses, à l'intérieur de la mélangeuse, 35 litres d'eau à 15 °C, ce qui amène l'humidité totale de la farine à 25,5%. La durée totale du mélange est de 15 minutes.

Après avoir placé cette farine en couche de 4 cm sur des plateaux, on l'introduit dans un autoclave, et la vapeur est alors admise à une pression de 0,5 bars pendant 20 minutes.

A la sortie de l'autoclave, la température au cœur de la farine est de 88 °C, et l'humidité est de 29,5%.

Les plateaux sont alors vidés dans une trémie qui alimente une installation de broyage – séchage à basse température.

On recueille 200 kg d'une farine de maïs prégélatinisée partiellement.

Exemple 3

En utilisant un amylographe Brabender, on a comparé les caractéristiques d'une farine avant et après traitement conformément au procédé de l'invention.

Une farine de blé T.55 a été examinée avant et après l'autoclavage selon les mêmes données que l'exemple 1.

Les résultats sont consignés dans le tableau ci-dessous. Dans ce tableau, la colonne A indique le poids de farine à 14% d'humidité pour 450 g d'eau, la colonne B indique la viscosité en U B (unités Brabender) après 15 mn à une température de 90 °C, et la colonne C indique la viscosité en U B après 30 minutes à 90 °C.

|  | A | B | C |
|---|---|---|---|
| avant le procédé | 80 | 350 | 100 |
| après le procédé | 57,9 | 500 | 600 |

Les résultats exposés au tableau ci-dessus montrent que dans le cas d'une farine non traitée (avant le procédé) la cuisson entraine une augmentation de la viscosité jusqu'à un maximum de 350 U B après environ 15 mn, puis la viscosité décroit si la cuisson est prolongée, pour revenir à une valeur proche de la valeur initiale.

Au contraire, dans le cas d'une farine traitée conformément à la présente invention, la viscosité augmente de manière continue jusqu'à une valeur de 600 U B après 30 mn de cuisson à 90 °C.

Cette comparaison met en évidence les avantages du procédé de l'invention.

Exemple 4

On a comparé les propriétés de trois produits traités différemment en ce qui concerne la résistance au cisaillement à froid (température ambiante):

– Produit n° 1: Farine traitée conformément à l'invention.

– Produit n° 2: Amidon prégélatinisé modifié chimiquement.

– Produit n° 3: Farine mise en suspension et cuite sur cylindre.

La farine constituant le produit n° 3 est du type des farines instantanées couramment utilisées dans l'alimentation.

On constate alors que les produits n° 1 et n° 2 présentent sensiblement la même résistance au cisaillement; toutefois, ce résultat est obtenu pour un amidon modifié (produit n° 2) dont la concentration est de 10%, tandis que celle du produit n° 1 conforme à la présente invention est de 25%, soit respectivement 9,1 et 18% en produit sec.

La farine séchée sur cylindre (produit n° 3) reprend autant d'eau que l'amidon modifié, mais ne résiste pas au cisaillement.

**Revendications**

1. Procédé de prégélatinisation partielle d'une farine végétale par humidification et chauffage caractérisé en ce qu'on donne à la farine une humidité totale comprise entre 18 et 35%, on chauffe à la vapeur d'eau pendant 5 à 50 minutes, de telle sorte que la température au cœur de la farine, mesurée à la sortie du dispositif de chauffage, soit d'environ 85 à 90 °C, on broie et on sèche la farine ainsi traitée.

2. Procédé selon la revendication 1, caractérisé en ce que la farine humidifiée est répartie avant chauffage sur des plateaux en couche d'épaisseur comprise entre 1 et 5 cm.

3. Procédé selon l'une quelconque des revendications 1 et 2, caractérisé en ce que la farine humidifiée est chauffée à la vapeur de manière à obtenir une pression de vapeur comprise entre 0,5 et 0,9 bars.

4. Procédé selon la revendication 3, caractérisé en ce que l'on chauffe pendant 5 à 25 mn.

5. Procédé selon l'une quelconque des revendications 1 et 2, caractérisé en ce qu'on chauffe à pression atmosphérique en vapeur saturée, pendant 20 à 50 minutes.

6. Farine végétale prégélatinisée partiellement caractérisée en ce qu'elle est obtenue par humidification de manière à procurer une humidité totale comprise entre 18 et 35%, chauffage à la vapeur d'eau pendant 5 à 50 minutes de telle sorte que la température au cœur de la farine, mesurée à la sortie du dispositif de chauffage, soit d'environ 85 à 90 °C, broyage et séchage.

**Patentansprüche**

1. Verfahren zur teilweisen Vorgelierung eines Pflanzenmehls durch Befeuchtung und Erwärmung, dadurch gekennzeichnet, dass man dem Mehl eine Gesamtfeuchtigkeit zwischen 18 und 35% gibt, und man es in Wasserdampf während 5 bis 50 Minuten so erwärmt, dass die Temperatur im Kern des Mehles, gemessen am Ausgang der Heizvorrichtung, zwischen 85 und 90 °C liegt, und dass man das so behandelte Mehl zerstösst und trocknet.

2. Verfahren nach Anspruch 1, dadurch gekennzeichnet, dass das befeuchtete Mehl vor der Erwärmung auf Platten mit einer Schichtdicke zwischen 1 und 5 cm verteilt wird.

3. Verfahren nach einem der Ansprüche 1 und 2, dadurch gekennzeichnet, dass das befeuchtete Mehl in Wasserdampf so erwärmt wird, dass man einen Dampfdruck zwischen 0,5 und 0,9 bar erhält.

4. Verfahren nach Anspruch 3, dadurch gekennzeichnet, dass man während 5 bis 25 Minuten erwärmt.

5. Verfahren nach einem der Ansprüche 1 und 2, dadurch gekennzeichnet, dass man bei Atmosphärendruck in gesättigtem Dampf während 20 bis 50 Minuten erwärmt.

6. Teilweise vorgeliertes Pflanzenmehl, dadurch gekennzeichnet, dass es erhalten ist durch Befeuchtung in der Weise, dass man eine Gesamtfeuchtigkeit zwischen 18 und 35% einstellt, durch Erwärmung mit Wasserdampf während 5 bis 50 Minuten derart, dass die Temperatur im Kern des Mehles, gemessen am Ausgang der Heizvorrichtung, zwischen 85 und 90 °C liegt, und durch Zerstossen und Trocknen.

## Claims

1. A process for partial pregelatinization of a vegetable flour comprising moistening and heating, characterized in that it comprises moistening the flour to give it a total moisture content between 18 and 35%, heating with steam for 5 to 50 minutes, so that the temperature in the middle of the flour, measured at the exit of the heating device, is about 85 to 90 °C, grinding, and drying the treated flour.

2. The process as claimed in claim 1, characterized in that the moistened flour is spread out before heating on trays as a layer of a thickness between 1 and 5 cm.

3. The process as claimed in one of claims 1 or 2, characterized in that the moistened flour is heated with steam so as to obtain a steam pressure between 0,5 and 0,9 bars.

4. The process as claimed in claim 3, characterized in that heating is carried out for 5 to 25 minutes.

5. The process as claimed in any one of claims 1 or 2, characterized in that heating is carried out in saturated steam at an atmospheric pressure, for 20 to 50 minutes.

6. Partially pregelatinized vegetable flour characterized in that it is obtained by moistening the flour so as to produce a total moisture content between 18 and 35%, heating with steam for 5 to 50 minutes, so that the temperature in the middle of the flour, measured at the exit of the heating device, is about 85 to 90 °C, grinding and drying.